Europäisches Patentamt

European Patent Office

Office européen des brevets

(11) Veröffentlichungsnummer : **0 059 914**
**B1**

(12) **EUROPÄISCHE PATENTSCHRIFT**

(45) Veröffentlichungstag der Patentschrift :
22.01.86

(51) Int. Cl.⁴ : **B 60 Q   3/02**, B 60 Q   9/00

(21) Anmeldenummer : 82101545.0

(22) Anmeldetag : 27.02.82

(54) **Beleuchtungseinrichtung.**

(30) Priorität : 02.03.81 DE 8105895 U
            04.07.81 DE 3126427

(43) Veröffentlichungstag der Anmeldung :
15.09.82 Patentblatt 82/37

(45) Bekanntmachung des Hinweises auf die Patenterteilung : 22.01.86 Patentblatt 86/04

(84) Benannte Vertragsstaaten :
DE FR GB IT SE

(56) Entgegenhaltungen :
EP-A- 0 016 854
DE-A- 2 810 659
DE-A- 2 819 913
DE-A- 2 854 480
DE-A- 3 006 932
DE-A- 3 013 101
DE-A- 3 022 156

(73) Patentinhaber : Fuchshuber, Franz
Ebenweilerstrasse 5
D-7963 Altshausen (DE)

(72) Erfinder : Fuchshuber, Franz
Ebenweilerstrasse 5
D-7963 Altshausen (DE)

(74) Vertreter : Eisele, Eberhard, Dipl.-Ing. et al
Patentanwälte Eisele & Dr. Otten Goetheplatz 7
D-7980 Ravensburg (DE)

## Beschreibung

Die Erfindung betrifft eine Beleuchtungseinrichtung für den Kraftfahrzeuginnenraum, nach dem Oberbegriff des Anspruchs 1.

Um das sofortige Erlöschen der Kraftfahrzeuginnenbeleuchtung nach dem Schließen der Türen zu vermeiden, ist eine Kfz-Innenbeleuchtung bekannt geworden, die auch nach dem Schließen der Türe für einige Sekunden weiterhin in Betrieb ist. Nach ca. 10 bis 20 sekunden schaltet diese Beleuchtung abrupt ab, was oft als störend empfunden wird. Insbesondere kann sich bei derartigen sog. Timer das Auge nicht an die Dunkelheit gewöhnen. Weiterhin werden die notwendigen Handgriffe im oder außerhalb vom Kraftfahrzeug durch das abrupte Abschalten der Innenbeleuchtung oftmals gestört.

Aus der Druckschrift DE-A-2 819 913 ist ein Schaltkreis zur Abschaltung der Innenbeleuchtung bekannt geworden, bei welchem das Licht nach dem Schließen der Türe nur langsam ausgeht, so daß sich zum einen das Auge an die Dunkelheit gewöhnen kann, zum anderen der Zeitpunkt des Erdunkelns besser abgeschätzt werden kann. Hierbei handelt es sich jedoch um eine Schaltung, die eine Innenbeleuchtung insgesamt betrifft, d. h. nicht zum nachträglichen Einbau an eine vorhandene Innenbeleuchtung dient.

Weiterhin ist aus der Druckschrift DE-A-2 854 480 eine Schaltung bekannt geworden, die nachträglich an eine im Kraftfahrzeug vorhandene Beleuchtungseinrichtung montierbar ist. Hierbei handelt es sich jedoch um einen abrupt abschaltenden Timer mit einer aufwendigen Steuerungsschaltung in COS/MOS-Technik.

Die bekannten Einrichtungen haben insgesamt den Nachteil, daß der Aufbau der Schaltungen es nicht erlaubt, daß sie ohne weiteres an den im Kraftfahrzeug vorhandenen Beleuchtungsschaltkreis angeschlossen werden können. Es ist durchaus möglich, daß durch Vertauschung von bestimmten Anschlüssen der Schaltkreis der Verzögerungsschaltung zerstört werden kann.

Der Erfindung liegt deshalb die Aufgabe zugrunde, einen äußerst einfach aufgebauten Schaltkreis zur Herstellung einer langsam ausgehenden Verzögerungsschaltung für eine Kraftfahrzeug-Innenbeleuchtung zu schaffen, der unmitelbar ohne Aufwand an einen vorhandenen Schaltkreis einer Innenbeleuchtung mit nur zwei Anschlüssen angeschlossen werden kann.

Die erfindungsgemäße Aufgabe wird durch den kennzeichnenden Teil des Anspruchs 1 gelöst.

Die erfindungsgemäße Anordnung hat genenüber den bekannten Einrichtungen den Vorteil, daß durch den außerordentlich einfachen Aufbau des Schaltkreises lediglich zwei Anschlußleitungen an den vorhandenen Lampenanschluß an der Kraftfahrzeuginnenbeleuchtung angeklemmt werden müssen. Hierdurch vereinfacht sich die Montage und Fehlschaltungen werden auch bei Vertauschung der Anschlußleitungen vermieden.

Darüber hinaus weist die erfindungsgemäße Anordnung ein Minimum an Bauteilen bei optimaler Wirkungsweise auf, was sich auf den Herstellungspreis der Schaltung auswirkt. Bei einem Massenprodukt sind auch geringe Einsparungen von Bedeutung.

Die in den Unteransprüchen aufgeführten Maßnahmen stellen vorteilhafte Weiterbildungen des Gegenstandes des Anspruchs 1 dar.

Die Weiterbildung der Erfindung nach Unteranspruch 3 ermöglicht eine stufenlose Einstellung der Beleuchtungsdauer. Mit den vorteilhaften Maßnahmen nach Unteranspruch 4 wird eine Zerstörung der elektronischen Schaltung, insbesondere des Steuertransistors und des Elkos durch versehentliche Verpolung der Anschlüsse bei der Installation der Vorrichtung vermieden. Die Ausgestaltung der Erfindung nach Unteranspruch 5 dazu, daß die Innenbeleuchtung auch bei Nichtöffnung der Türe eingeschaltet werden können.

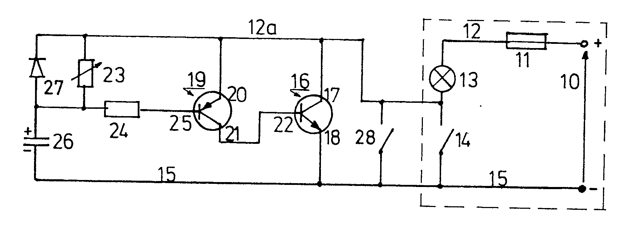

Ein Ausführungsbeispiel der Erfindung ist in der Zeichnung dargetellt und in der nachfolgenden Beschreibung näher erläutert. Die Figur zeigt eine Darstellung des Schaltplanes der erfindungsgemäßen Einrichtung.

In der Figur ist auf der rechten Seite der herkömmliche Teil einer KFZ-Innenraumbeleuchtung dargestellt. An einer Spannungsquelle 10 ist am Pluspol über die Sicherung 11 und Plusleitung 12 die Innenraumbeleuchtung 13 über den Türschalter 14 und Minusleitung 15 zum Minuspol angeschlossen. In der Figur ist der Schalter 14 geöffnet (Türe geschlossen), d. h. die Innenraumbeleuchtung 13 bei üblichen Kraftfahrzeugen erloschen.

Bei der erfindungsgemäßen Einrichtung wird der durch den geöffneten Schalter 14 fehlende Masseschluß zur Lampe 13 über einen Leistungstransistor 16 dessen Kollektor 17 mit der Lampe 13 und dessen Emitter 18 mit dem Massepol 15 verbunden ist, hergestellt.

Der Leistungstransistor 16 wird von einem Steuertransistor 19 angesteuert, dessen Emitter 20 ebenfalls mit der Lampe 13 und dessen Kollektor 21 mit der Basis 22 des Leistungstransistors 16 verbunden ist.

Um den Steuertransistor 19 anzusteuern, ist ein regelbarer Vorwiderstand 23 und ein Widerstand 24 vorgesehen, die auf die Basis 25 des Steuertransistors 19 einwirken. Der regelbare Vorwiderstand 23 ist ebenfalls mit der Leitung 12a der Lampe 13 verbunden (Pluspol).

Parallel zum Leistungstransistor 16 ist weiterhin ein Elektrolytkondensator 26 vorgesehen, dessen Pluspol mit der Lampe 13 und dessen Minuspol mit Masse verbunden sind. Um Schäden beim Verpolen

2

der Vorrichtung zu vermeiden ist eine Diode 27 zwischen dem Pluspol (Leitung 12a) und dem Steuertransistor 19 bzw. dem Elektrolytkondensator 26 vorgesehen.

Die Vorrichtung wirkt wie folgt :

Beim Schließen der Fahrzeugtüren und somit beim Öffnen des Türkontakt-Schalters 14 lädt sich der Elektrolytkondensator 26 langsam auf. Der Steuertransistor 19 (pnp-Tr.) liegt mit seinem Emitter 20 am Pluspol (Leitung 12a). Die Basis 25 des Transistors 19 ist infolge des Aufladevorganges des Elkos 26 negativer als der Emitter 20, d. h. der Transistor 19 ist leitend und steuert über den Kollektor 21 die Basis 22 des Leistungstransistors 16 (npn-Tr.) an. Hierdurch wird dieser leitend und ein Strom fließt von Kollektor 17 zum Emitter 18. Daraufhin fließt ein Strom über die Lampe 13, die Leitung 12a, durch den Kollektor 17 und den Emitter 18 des Leistungstransistors 16 zur Masseleitung 15 der Schaltungsanordnung. Die Lampe 13 leuchtet demnach auch bei offenem Schalter 14, d. h. bei geschlossener Tür.

Bei zunehmender Ladungssättigung des Elektrolytkondensators 26 steigt die Spannung an der Basis 25 des Transistors 19 und der Stromdurchgang nimmt ab. Hierdurch steuert der Steuertransistor 19 über seinen Kollektor 21 die Basis 22 des Leistungstransistors 16 derart an, daß der Transistor 16 zunehmend hochohmiger wird, d. h. der Stromfluß durch den Leistungstransistor 16 verringert sich. Nach annähernder Sättigung des Elektrolytkondensators 26 fließt kein Strom mehr durch den Leistungstransistor 16, wodurch die Lampe 13 erlischt. Durch Einstellung des Vorwiderstandes 23 kann die Zeit der Erlöschens geregelt werden. Als günstige Werte haben sich ca. 20 bis 30 Sekunden ergeben.

Die Diode 27 verhindert eine Zerstörung des Steuertransistors 19 bzw. des Elektrolytkondensators 26 durch versehentliche Verpolung der Anschlüsse bei der Instalation des Dimmers.

Beim Öffnen der Türe wird der Türschalter 14 geschlossen und die Innenraumbeleuchtung 13 auf herkömmliche Weise wieder eingeschaltet. In diesem Fall ist die erfindungsgemäße Schalgung zwangsweise kurzgeschlosen, d. h. der Elektrolytkondensator 26 entlädt sich. Wird der Türkontaktschalter 14 geöffnet, beginnt der Funktionsablauf von vorn.

Um eine Unabhängigkeit vom Türschalter 14 zu erreichen, kann ein weiterer Schalter 28 vorgesehen sein, der zum Kurzschliessen des aufgeladenen Elektrolytkondensators 26 dient. Dies kann ein Tippschalter im Inneren des Kraftfahrzeuges sein, nach dessen kurzer Betätigung die Innenraumbeleuchtung 13 sofort zu leuchten beginnt und erfindungsgemäß langsam die Beleuchtungsstärke abnimmt. Der schalter 28 kann jedoch auch ein von außen des Kraftfahrzeugs erreichbarer Schalter sein, um die Innenraumbeleuchtung von außen einzuschalten. Hierfür wäre insbesondere ein Reed-Kontakt (Magnetschalter), ein Annäherungsschalter oder sonstiger geeigneter Sensor möglich.

Die erfindungsgemäße Schaltung wird vorteilhafterweise in ein Gehäuse eingegossen, um dem Leistungstransistor 16 die notwendige Kühlung zu vermitteln und die Schaltung vor äußeren Einflüssen zu schützen. Die nach außen führenden Anschlußleitungen werden zweckmäßig etwas dicker (1,5 mm)$^2$ ausgeführt, um dem Gehäuse gleichzeitig einen gewissen Halt zu geben.

Als Bauelemente für die Bestückung der erfindungsgemäßen Schaltung haben sich folgende bewährt :

| | |
|---|---|
| Leistungstransistor 16 : | NPN-Transistor BD 243 C |
| Steuertransistor 19 : | PNP-Transistor BC 307 B |
| Elko 26 : | 100 μF |
| Diode 27 : | 1N 4003 |
| Widerstand 23 : | 10 bis 22 k |
| Widerstand 24 : | 1 k |

Die Erfindung kann ohne Änderung der Bauelemente an einer Batteriespannung zwischen 12 und 24 Volt ohne weiteres betrieben werden.

Selbstverständlich ist die erfindungsgemäße Einrichtung auch für andere Lampen am Kraftfahrzeug geeignet, die eine ähnliche Funktion ausüben sollen.

**Patentansprüche**

1. Beleuchtungseinrichtung für den Kraftfahrzeuginnenraum, mit einer Verzögerungsschaltung bestehend aus einem, bei geöffnetem Türkontakt (14) sich langsam aufladenden Elektrolyt-Kondensator (26), der einen langsamen Anstieg des Basispotential eines Steuertransistors (19) bewirkt, so daß der Stromdurchgang durch den Steuertransitor (19) langsam zurückgeht, wobei der Kollektorstrom (21) des Steuertransistors (19) die Basis (17) eines Leistungstransistors (16) derart beeinflußt, daß der Stromdurchgang durch den Leistungstransistor (16) und damit durch eine Lampe (13) langsam zurückgeht und wobei ein erster Stromanschluß vom Minuspol des Elektrolyt-Kondensators (26) bzw. vom Emitteranschluß (18) des Leistungstransistors (16) zur vorhandenen Masseleitung (15) des Innenbeleuchtungsstromkreises führt, dadurch gekennzeichnet, daß der elektronische Schaltkreis der Verzögerungsschaltung unmittelbar mit zwei Drahtanschlüssen (12a, 15) an einen vorhandenen Beleuchtungsstromkreis einer Kraftfahrzeuginnenbeleuchtung parallel zum Türkontakt (14) anschließbar ist, wobei einer (12a) der Drahtanschlüsse den Emitter (20) eines pnp-Steuertransistors (19) und den Kollektor (17) eines npn-Leistungstransistors (16) unmittelbar stromabwärts mit der Lampe (13) verbindet.

2. Beleuchtungseinrichtung nach Anspruch 1, dadurch gekennzeichnet, daß der Kollektor (21) des Steuertransistors (19) unmittelbar mit der Basis (22) des Leistungstransistors (16) verbunden ist.

3. Beleuchtungseinrichtung nach Anspruch 1 oder 2, dadurch gekennzeichnet, daß ein variabler Widerstand (23) zwischen der Plusleitung (12a) und dem Pluspol des Elektrolyt-Kondensators (26) den Spannungsanstieg im Elektrolyt-Kondensator (26) und damit den Durchgangsstrom des Steuertransistors (19) beeinflußt.

4. Beleuchtungseinrichtung nach einem oder mehreren der vorhergehenden Ansprüche, dadurch gekennzeichnet, daß zwischen Pluspol (12a) und dem Elektrolyt-Kondensator (26) eine Diode (27) vorgesehen ist.

5. Beleuchtungseinrichtung nach einem oder mehreren der vorhergehenden Ansprüche, dadurch gekennzeichnet, daß zur Kurzschließung des Elektrolyt-Kondensators (26) ein Annäherungsschalter, Sensor, Tippschalter o. dgl. im Inneren oder Außen vom Kraftfahrzeug vorgesehen sind.

**Claims**

1. Lighting device for the interior of a motor vehicle, having a delay circuit consisting of an electrolytic capacitor (26) which charges slowly when the door contact (14) is opened and which brings about a slow rise in base potential in a control transistor (19), so that the passage of current through the control transistor (19) slowly recedes, the collector current (21) of the control transistor (19) so influencing the base (17) of a power transistor (16) that the current flow through the power transistor (16) and thus through a lamp (13) slowly recedes, a first current connection leading from the minus pole of the electrolytic capacitor (26) or from the emitter connection (18) of the power transistor (16) to the existing earth lead (15) of the interior lighting circuit, characterised in that the electronic circuit of the delay circuit has two wire connections (12a, 15) for connection to an existing lighting circuit of a vehicle interior lighting system parallel with the door contact (14), one (12a) of the wire connections connecting the emitter (20) of a pnp control transistor (19) and the collector (17) of a npn power transistor (16) directly to the lamp (13) on the downstream side.

2. Lighting arrangement according to Claim 1, characterised in that the collector (21) of the control transistor (19) is connected directly to the base (22) of the power transistor (16).

3. Lighting arrangement according to Claim 1 or 2, characterised in that a variable resistance (23) between the plus line (12a) and the plus pole of the electrolytic capacitor (26) influences the voltage rise in the electrolytic capacitor (26) and thus the current flowing through the control transistor (19).

4. Lighting arrangement according to one or more of the preceding Claims, characterised in that a diode (27) is provided between plus pole (12a) and electrolytic capacitor (26).

5. Lighting arrangement according to one or more of the preceding Claims, characterised in that a proximity switch, sensor, tumbler switch or the like is provided on the inside or outside of the motor vehicle in order to short-circuit the electrolytic capacitor (26).

**Revendications**

1. Dispositif d'éclairage pour le compartiment intérieur d'un véhicule automobile, comportant un montage de temporisation constitué d'un condensateur électrolytique (26) qui se charge lentement pour un contact de porte (14) ouvert, et qui provoque une montée lente du potentiel de base d'un transistor de commande (19), de sorte que le passage de courant à travers le transistor de commande (19) diminue lentement, par quoi le courant du collecteur (21) du transistor de commande (19) influence la base d'un transistor de puissance (16) de sorte que le passage de courant à travers le transistor de puissance (16) et, ainsi, à travers une lampe (13) diminue lentement et par quoi une première connexion de courant relie le pôle négatif du condensateur électrolytique (26) ou la connexion de l'émetteur (18) du transistor de puissance (16) à la ligne de masse (15) existante du circuit de courant de l'éclairage intérieur, caractérisé en ce que le circuit de commutation électronique du montage de temporisation peut être connecté directement par deux lignes de connexion (12a, 15) à un circuit de courant d'éclairage existant d'un éclairage intérieur d'un véhicule automobile parallèlement au contact de porte (14), par quoi une (12a) des lignes de connexion relie l'émetteur (20) d'un transistor de commande PNP (19) et le collecteur (17) d'un transistor de puissance PNP (19) et le collecteur (17) d'un transistor de puissance NPN (16) directement en aval à la lampe (13).

2. Dispositif d'éclairage selon la revendication 1, caractérisé en ce que le collecteur (21) du transistor de commande (19) est relié directement à la base (22) du transistor de puissance (16).

3. Dispositif d'éclairage selon la revendication 1 ou 2, caractérisé en ce qu'une résistance variable (23) entre la ligne positive (12a) et le pôle positif du condensateur électrolytique (26) influence la montée de tension dans le condensateur électrolytique (26) et, en conséquence, le courant de passage du transistor de commande (19).

4. Dispositif d'éclairage selon l'une ou plusieurs des revendications précédentes, caractérisé en ce qu'entre le pôle positif (12a) et le condensateur électrolytique (26) est prévue une diode (27).

5. Dispositif d'éclairage selon l'une ou plusieurs des revendications précédentes, caractérisé en ce que pour court-circuiter le condensateur électrolytique (26), on prévoit un commutateur de proximité, un capteur, un commutateur à impulsion ou analogue à l'intérieur ou à l'extérieur du véhicule automobile.